# EUROPEAN PATENT APPLICATION

(11) **EP 2 631 158 A1**
(43) Date of publication of application: **28.08.2013**
(21) Application number: 10858636.3
(22) Date of filing: 20.10.2010
(51) Int. Cl.: B62D 25/04, B62D 25/06

(54) **VEHICLE BODY STRUCTURE**

(71) Applicant: TOYOTA JIDOSHA KABUSHIKI KAISHA, Toyota-shi, Aichi-ken, 471-8571 (JP)
(72) Inventor: KUROKAWA, Hiroyuki, Toyota-shi Aichi 471-8571 (JP)
(74) Representative: Winter, Brandl, Fürniss, Hübner, Röss, Kaiser, Polte - Partnerschaft
(86) International application number: PCT/JP2010/068518
(87) International publication number: WO 2012/053080

(57) **Abstract**

To be able to narrow the width of a front pillar portion while suppressing an increase in costs and also ensure the rigidity and the strength of the front pillar portion. In a vehicle body structure (10) of the present invention, an inner panel (28) of a frame member (22) has an inner side flange (58) that is joined to an outer side flange (38) of a side outer panel (24). The inner side flange (58) has a front side flange (58A) that extends outward in a vehicle width direction from a vehicle upper side end portion of an inner side wall portion (52) and a rear side flange (58B) that extends inward in the vehicle width direction from the vehicle upper side end portion of the inner side wall portion (52). A cutout (60) formed so as to open to the vehicle upper side in the inner side wall portion (52) between the front side flange (58A) and the rear side flange (58B) in the vehicle width direction is positioned inside a closed cross-section (98) formed by a front portion (62A) of a roof panel (62) and a header panel (64) as seen in a vehicle side view.

## Description

### Technical Field

The present invention relates to a vehicle body structure.

### Background Art

In patent document 1, there is disclosed a vehicle front portion structure where an upper portion of a front pillar is joined via an upper joining panel to a side end portion of a roof header member and a vehicle front side end portion of a roof side member. In this vehicle front portion structure, a flange formed on a front edge of a pillar inner panel configuring the front pillar is formed facing outward in a vehicle width direction, and an upper portion of the flange extends to a position where it overlaps a vehicle front side end portion of a side inner panel configuring the roof side member.

### Prior Art Documents

### <Patent Documents>

Patent Document 1: Japanese Patent Application Laid-Open (JP-A) No. 2007-30780
Patent Document 2: International Publication No. 2006/038430 pamphlet

### SUMMARY OF INVENTION

### Technical Problem

According to the structure described in patent document 1, the flange formed on the front edge of the pillar inner panel is formed facing outward in the vehicle width direction, so protruding of the front pillar inward in the vehicle width direction can be suppressed and the front pillar can be made narrower. Further, the upper portion of the flange extends to a position where it overlaps the vehicle front side end portion of the side inner panel configuring the roof side member, so the rigidity and the strength of the front pillar can be ensured.

However, because the upper portion of the front pillar is joined via the upper joining panel to the side end portion of the roof header member and the vehicle front side end portion of the roof side member, costs increase in correspondence to using the upper joining panel.

The present invention has been made in view of the above-described problem, and it is an object of the present invention to provide a vehicle body structure in which a front pillar portion can be made narrower while suppressing an increase in costs and in which the rigidity and the strength of the front pillar portion can also be ensured.

### Solution to Problem

In order to solve the above-described problem, a vehicle body structure of the present invention includes: a frame member that has a side outer panel integrally having an outer side flange that extends inward in a vehicle width direction and an outer side wall portion that is formed on a vehicle width direction outer side of the outer side flange and an inner panel integrally having an inner side flange that is joined to the outer side flange and an inner side wall portion that is disposed opposing the outer side wall portion on a vehicle width direction inner side of the outer side wall portion, wherein the frame member extends in a vehicle front-and-rear direction and configures a front pillar portion and a roof side rail portion of a vehicle body; and a header panel that extends in the vehicle width direction, has a vehicle width direction outer side end portion that is joined to the frame member, has a cross-sectional shape cut along the vehicle front-and-rear direction that is formed in a hat-like shape, is joined to a roof panel configuring a roof portion of the vehicle body, and configures a closed cross-section together with the roof panel, wherein the inner side flange has a front side flange that is formed on a section of the inner side wall portion configuring the front pillar portion and a front portion of the roof side rail portion and extends outward in the vehicle width direction from a vehicle upper side end portion of the inner side wall portion and a rear side flange that is formed on a section of the inner side wall portion configuring a vehicle rear side portion on a vehicle rear side of the front portion of the roof side rail portion and extends inward in the vehicle width direction from a vehicle upper side end portion of the inner side wall portion, and a cutout formed so as to open to the vehicle upper side in the inner side wall portion between the front side flange and the rear side flange in the vehicle width direction is positioned inside the closed cross-section as seen in a vehicle side view.

According to this vehicle body structure, the front side flange formed on the section of the inner side wall portion configuring the front pillar portion and the front portion of the roof side rail portion extends outward in the vehicle width direction from the vehicle upper side end portion of the inner side wall portion. Consequently, protruding of the front pillar portion inward in the vehicle width direction can be suppressed, so the front pillar portion can be made narrower.

Further, because the front side flange is formed on the section of the inner side wall portion configuring the front pillar portion and the front portion of the roof side rail portion as described above, the cutout formed in the inner side wall portion between the front side flange and the rear side flange in the vehicle width direction is positioned on the vehicle rear side of the front pillar portion. Consequently, the cutout is formed in a position away from the front pillar portion, so the rigidity and the strength of the front pillar portion can be ensured.

Further, although the cutout is formed in the roof side rail portions, the cutout is positioned inside the closed cross-section formed by the roof panel and the header panel as seen in a vehicle side view. Consequently, because the cutout is positioned inside the closed cross-section, which is a region whose rigidity is high, a drop in the rigidity and the strength of the rood side rail portion can also be suppressed while ensuring the rigidity and the strength of the front pillar portion.

Further, the frame member configures the front pillar portion and the roof side rail portion, and the vehicle width direction outer side end portion of the header panel is joined to the frame member. Consequently, another member is not used to join together the front pillar portion, the roof side rail portion, and the header panel, so an increase in costs can be suppressed.

Here, in the vehicle body structure of the present invention, it is preferred that the cutout be positioned in a vehicle front-and-rear direction central portion, or on the vehicle rear side of the vehicle front-and-rear direction central portion, inside the closed cross-section as seen in a vehicle side view.

When configured in this way, the cutout is positioned in a region where the bending moment that acts in the direction causing the front pillar portion and the roof pillar portion to bend at the time of a frontal impact of the vehicle is decreased, so the rigidity and the strength of the front pillar portion can be ensured even more.

Further, in the vehicle body structure of the present invention, it is preferred that the cutout is near a joint portion at which a vehicle width direction outer side end portion of a vehicle rear side flange, of a pair of flanges formed on both vehicle front-and-rear direction side end portions of the header panel, is joined to the outer side flange and the rear side flange.

Here, the joint portion at which the vehicle width direction outer side end portion of the vehicle rear side flange of the pair of flanges is joined to the outer side flange and the rear side flange is a joint portion at which the frame member and the header panel are joined together and is a site whose rigidity is high. Consequently, when the cutout is near a site whose rigidity is high in this way, a drop in rigidity resulting from the cutout can be effectively compensated, so the rigidity and the strength of the front pillar portion can be ensured even more.

### Advantageous Effects of Invention

As described in detail above, according to the present invention, a front pillar portion can be made narrower while suppressing an increase in costs, and the rigidity and the strength of the front pillar portion can be ensured.

### BRIEF DESCRIPTION OF DRAWINGS

FIG. 1 is a perspective view showing a front pillar portion, a roof side rail portion, and a roof portion in a vehicle to which a vehicle body structure pertaining to an embodiment of the present invention is applied;
FIG. 2 is an enlarged cross-sectional view where the front pillar portion and its surrounding portions in the vehicle shown in FIG. 1 are cut by line 2-2;
FIG. 3 is an enlarged cross-sectional view taken along line 3-3 of FIG. 1;
FIG. 4 is an enlarged cross-sectional view taken along line 4-4 of FIG. 1; and
FIG. 5 is a diagram showing the relationship between vehicle front-and-rear direction positions in a frame member and a bending moment that acts in a direction causing the front pillar portion and the roof side rail portion to bend at the time of a frontal impact of the vehicle at those positions.

### DESCRIPTION OF EMBODIMENT

An embodiment of the present invention will be described below with reference to the drawings.

Arrow UP, arrow FR, and arrow RH shown in the drawings represent up in a vehicle up-and-down direction, front in a vehicle front-and-rear direction, and right in a vehicle width direction, respectively.

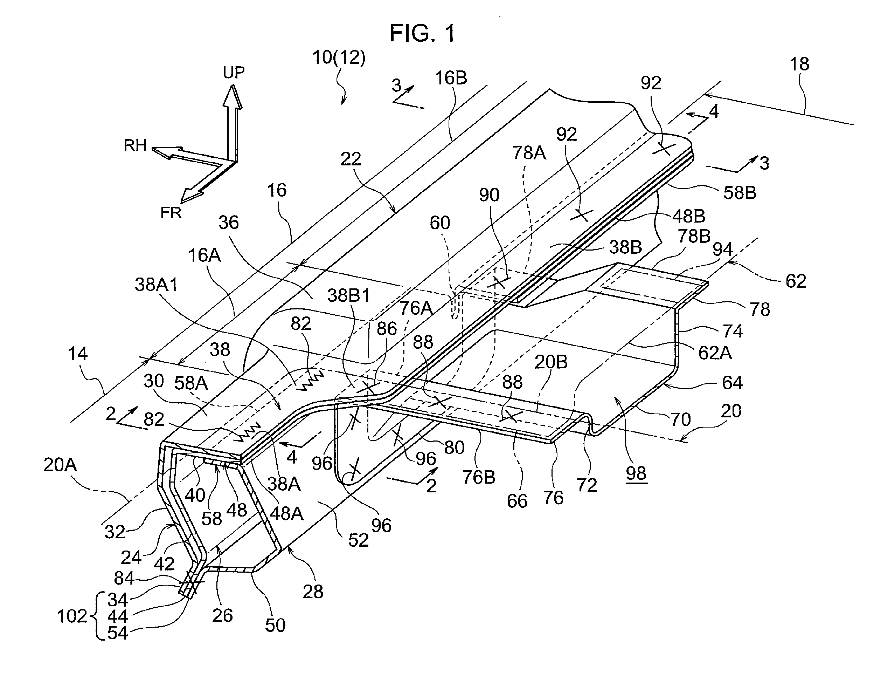

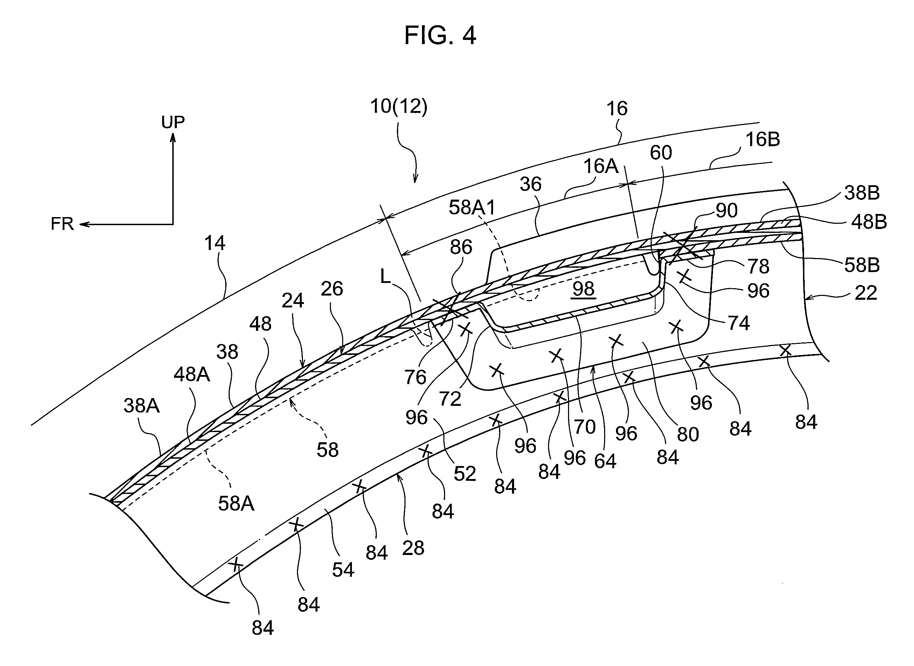

As shown in FIG. 1, a vehicle 12 to which a vehicle body structure 10 pertaining to the embodiment of the present invention is applied has, as parts of a vehicle body, a front pillar portion 14, a roof side rail portion 16, and a roof portion 18. The front pillar portion 14 is disposed along a vertical edge portion 20A of a windshield glass 20 and is inclined with respect to the vehicle front-and-rear direction in such a way as to head toward the vehicle upper side as it heads toward the vehicle rear side (see also FIG. 4).

The roof side rail portion 16 is disposed on the vehicle rear side of the front pillar portion 14 and on the vehicle width direction outer side of the roof portion 18 and is formed substantially horizontally. The front pillar portion 14 and the roof side rail portion 16 are integrally formed by a frame member 22 that extends in the vehicle front-and-rear direction.

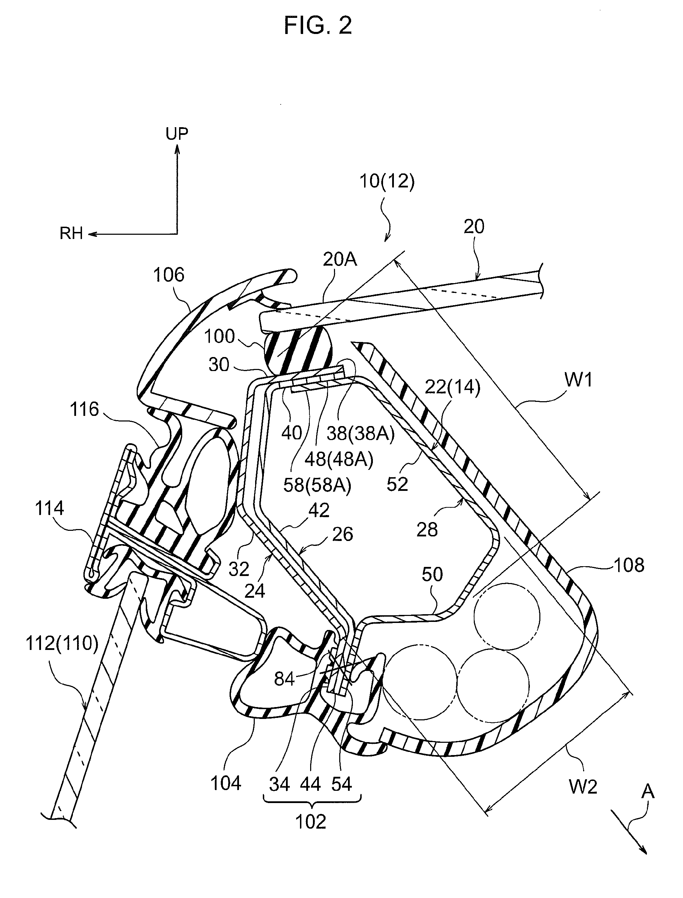

The frame member 22 is configured to have plural panels-that is, a side outer panel 24, a pillar reinforcement 26, and an inner panel 28. As shown in FIG. 2, the side outer panel 24 integrally has an upper side wall portion 30, an outer side wall portion 32, and a lower side flange 34. The upper side wall portion 30 extends inward in the vehicle width direction, and the outer side wall portion 32 extends toward the vehicle lower side from the vehicle width direction outer side end portion of the upper side wall portion 30. The lower side flange 34 extends outward in the vehicle width direction outer side and toward the vehicle lower side from the vehicle lower side end portion of the outer side wall portion 32.

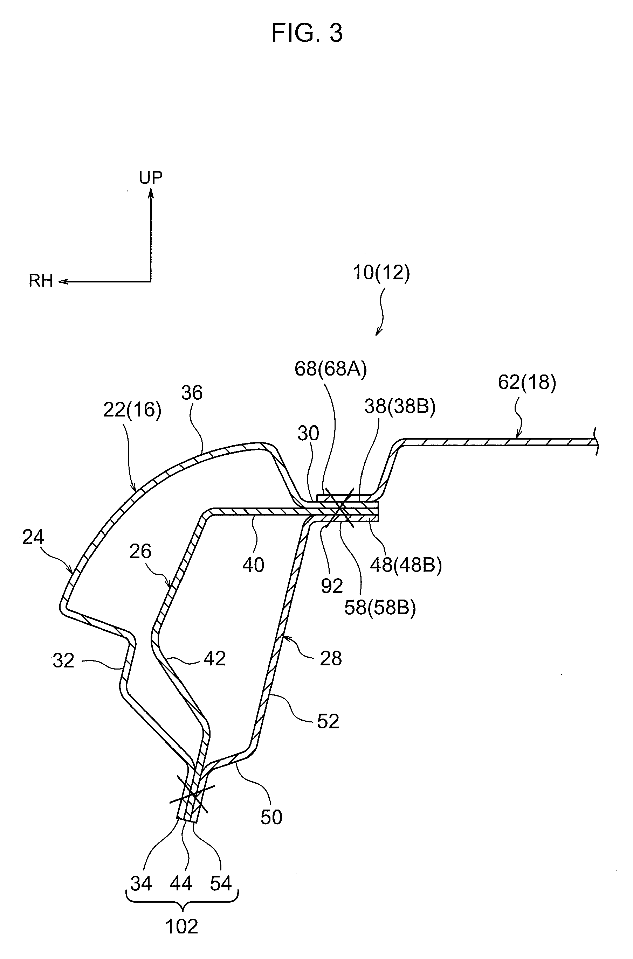

As shown in FIG. 1 and FIG. 3, a projecting portion 36 that projects toward the vehicle upper side and outward in the vehicle width direction is formed on a section of the upper side wall portion 30 and the outer side wall portion 32 configuring the roof side rail portion 16. Further, as shown in FIG. 1, the vehicle width direction inner side end portion of the upper side wall portion 30 is formed as an outer side flange 38 that extends inward in the vehicle width direction. The outer side flange 38 has a front portion 3 8A that is formed on the vehicle front side of the projecting portion 36 and a rear portion 38B that is formed on the vehicle width direction inner side of the projecting portion 36 and the front portion 38A. A vehicle front side part 38B1 of the rear portion 38B is positioned on the vehicle front side of the projecting portion 36 and overlaps in the vehicle front-and-rear direction a vehicle rear side part 38A1 of the front portion 38A.

The pillar reinforcement 26 is placed on the inner side of the side outer panel 24 and has an upper side reinforcement portion 40, an outer side reinforcement portion 42, and a lower side flange 44. The upper side reinforcement portion 40 is formed along the upper side wall portion 30, and the outer side reinforcement portion 42 is formed along the outer side wall portion 32. The lower side flange 44 is formed along the lower side flange 34 and is superposed on the vehicle lower side of the lower side flange 34. The vehicle width direction inner side end portion of the upper side reinforcement portion 40 is formed as a flange reinforcement portion 48 that extends inward in the vehicle width direction, and the flange reinforcement portion 48 has a front portion 48A that is superposed on the vehicle lower side of the front portion 3 8A of the outer side flange 38 and a rear portion 48B that is superposed on the vehicle lower side of the rear portion 38B of the outer side flange 38.

The inner panel 28 has a lower side wall portion 50, an inner side wall portion 52, a lower side flange 54, and an inner side flange 58. The inner side wall portion 52 is disposed opposing the outer side wall portion 32 on the vehicle width direction inner side of the outer side wall portion 32, and the lower side wall portion 50 extends outward in the vehicle width direction from the vehicle lower side end portion of the inner side wall portion 52. The lower side flange 54 extends outward in the vehicle width direction and toward the vehicle lower side from the vehicle width direction outer side end portion of the lower side wall portion 50 and is superposed on the vehicle lower side of the lower side flange 44.

The inner side flange 58 is formed on the vehicle upper side end portion of the inner side wall portion 52 and has a front side flange 58A and a rear side flange 58B. The front side flange 58A is formed on a section of the inner side wall portion 52 configuring the front pillar portion 14 and a front portion 16A of the roof side rail portion 16. The rear side flange 58B is formed on a section of the inner side wall portion 52 configuring a vehicle rear side portion 16B on the vehicle rear side of the front portion 16A of the roof side rail portion 16. Further, the front side flange 58A extends outward in the vehicle width direction from the vehicle upper side end portion of the inner side wall portion 52 and is superposed on the vehicle lower side of the front portion 48A of the flange reinforcement portion 48. The rear side flange 58B extends inward in the vehicle width direction from the vehicle upper side end portion of the inner side wall portion 52 and is superposed on the vehicle lower side of the rear portion 38B of the outer side flange 38.

Further, a cutout 60 that is cut out so as to open to the vehicle upper side is formed in the inner side wall portion 52 between the front side flange 58A and the rear side flange 58B in the vehicle width direction. The cutout 60 is formed as a necessity in order to switch the direction of the front side flange 5 8A in the opposite direction with respect to the rear side flange 58B when press-forming the inner panel 28. Amore detailed setting position of the cutout 60 will be described below.

The roof portion 18 is configured to have a roof panel 62 and a header panel 64. The roof panel 62 is placed on the vehicle rear side and the vehicle upper side of the windshield glass 20 and extends in the vehicle front-and-rear direction and the vehicle width direction. A flange 66 that extends toward the vehicle front side is formed on the vehicle front side end portion of the roof panel 62, and a flange 68 (see FIG. 3) that extends outward in the vehicle width direction is formed on the vehicle width direction outer side end portion of the roof panel 62.

The header panel 64 extends in the vehicle width direction, is disposed along an upper edge portion 20B of the windshield glass 20, and is placed on the vehicle lower side of a front portion 62A of the roof panel 62. The header panel 64 has a cross-sectional shape cut along the vehicle front-and-rear direction that is formed in a hat-like shape opening to the vehicle upper side. That is, the header panel 64 has a bottom wall portion 70, a pair of side wall portions 72 and 74 that are formed on both vehicle front-and-rear direction sides of the bottom wall portion 70, and a pair of flanges 76 and 78 that are formed on the vehicle upper sides of the side wall portions 72 and 74.

A vehicle width direction outer side end portion 76A of the vehicle front side flange 76 is superposed on the vehicle lower side of the rear portion 38B of the outer side flange 38, and a middle portion 76B on the vehicle width direction inner side of the vehicle width direction outer side end portion 76A of the vehicle front side flange 76 is superposed on the vehicle lower side of the flange 66. A vehicle width direction outer side end portion 78A of the vehicle rear side flange 78 is superposed on the vehicle lower side of the rear side flange 58B, and a middle portion 78B on the vehicle width direction inner side of the vehicle width direction outer side end portion 78A of the vehicle rear side flange 78 is superposed on the vehicle lower side of the front portion 62A of the roof panel 62.

Further, a flange 80 that has a U shape opening to the vehicle upper side and extends along the inner side wall portion 52 is formed on the vehicle width direction outer side end portion of the header panel 64. The flange 80 is formed integrally with the bottom wall portion 70, the pair of side wall portions 72 and 74, and the pair of flanges 76 and 78 and is superposed on the vehicle width direction inner side of the inner side wall portion 52.

Additionally, the side outer panel 24, the pillar reinforcement 26, the inner panel 28, the roof panel 62, and the header panel 64 configuring the vehicle body structure 10 are joined together as follows.

Namely, the front portion 38A of the outer side flange 38, the front portion 48A of the flange reinforcement portion 48, and the front side flange 58A are joined together by plural joint portions 82 resulting from laser welding, for example, that are lined up in the vehicle front-and-rear direction. The front portion 38A of the outer side flange 38, the front portion 48A of the flange reinforcement portion 48, and the front side flange 58A may also be joined together by arc welding. Further, the lower side flange 34, the lower side flange 44, and the lower side flange 54 are joined together by plural joint portions 84 resulting from spot welding, for example, that are lined up in the vehicle front-and-rear direction (see also FIG. 4).

Further, the rear portion 38B of the outer side flange 38, the rear portion 48B of the flange reinforcement portion 48, and the vehicle width direction outer side end portion 76A of the vehicle front side flange 76 are joined together by a joint portion 86 resulting from spot welding, for example. Further, the flange 66 and the middle portion 76B on the vehicle width direction inner side of the end portion 76A of the vehicle front side flange 76 are joined together by plural joint portions 88 resulting from spot welding, for example, that are lined up in the vehicle width direction.

Further, the rear portion 38B of the outer side flange 38, the rear portion 48B of the flange reinforcement portion 48, the rear side flange 58B, and the vehicle width direction outer side end portion 78A of the vehicle rear side flange 78 are joined together by a joint portion 90 resulting from spot welding, for example.

Although it is not shown in FIG. 1, the vehicle front side end portion of the flange 68 of the roof panel 62 shown in FIG. 3 is joined by the joint portion 86 shown in FIG. 1 to the rear portion 38B of the outer side flange 38, the rear portion 48B of the flange reinforcement portion 48, and the vehicle width direction outer side end portion 76A of the vehicle front side flange 76. Further, the section of the flange 68 of the roof panel 62 shown in FIG. 3 corresponding to the joint portion 90 (see FIG. 1) is joined by the joint portion 90 to the rear portion 38B of the outer side flange 38 shown in FIG. 1, the rear portion 48B of the flange reinforcement portion 48, the rear side flange 58B, and the vehicle width direction outer side end portion 78A of the vehicle rear side flange 78.

Further, as shown in FIG. 3, a vehicle rear side portion 68A of the flange 68 of the roof panel 62 on the vehicle rear side of the joint portion 90 (see FIG. 1), the rear portion 38B of the outer side flange 38, the rear portion 48B of the flange reinforcement portion 48, and the rear side flange 58B are joined together by plural joint portions 92 resulting from spot welding, for example, that are lined up in the vehicle front-and-rear direction (see also FIG. 1). Further, as shown in FIG. 1, the middle portion 78B on the vehicle width direction inner side of the vehicle width direction outer side end portion 78A of the vehicle rear side flange 78 and the front portion 62A of the roof panel 62 are adhered together by an adhesive 94. Moreover, the inner side wall portion 52 and the flange 80 are joined together by plural joint portions 96 resulting from spot welding, for example, that are lined up along the U shape of the flange 80.

And in this way, the frame member 22, the roof panel 62, and the header panel 64 are joined to each other. Further, the side outer panel 24, the pillar reinforcement 26, and the inner panel 28 are joined to each other, whereby the frame member 22 is formed in a closed cross-sectional shape. Further, as shown in FIG. 2, in the section of the frame member 22 configuring the front pillar portion 14, the outer side wall portion 32 and the inner side wall portion 52 extend toward an unillustrated front seat side (arrow A side). Additionally, the section of the frame member 22 configuring the front pillar portion 14 is formed in such a way that its lateral width W2 seen from the direction in which the outer side wall portion 32 and the inner side wall portion 52 extend toward the unillustrated front seat side becomes narrower than its vertical width W1 seen from the extending direction.

Further, as shown in FIG. 1, the header panel 64 is joined to the front portion 62A of the roof panel 62, reinforces the front portion 62A of the roof panel 62, and configures a closed cross-section 98 together with the roof panel 62. That is, the closed cross-section 98 is more specifically formed by the bottom wall portion 70 and the pair of side wall portions 72 and 74 formed in the header panel 64 and by the front portion 62A of the roof panel 62.

Next, the setting position of the cutout 60 will be described.

For example, in a case where the cutout formed between the front side flange 58A and the rear side flange 58B in the vehicle width direction had been positioned in the upper portion of the front pillar portion 14 as indicated by hypothetical line (double-dashed chain line) L in FIG. 4, there is the worry that the rigidity and the strength of the upper portion of the front pillar portion 14 will drop. However, costs increase in a case where, in order to compensate for this, a measure such as disposing a separate reinforcement member is taken.

Therefore, in the vehicle body structure 10, the following configuration is employed. That is, a rear end portion 58A1 of the front side flange 58A is extended until it overlaps in the vehicle front-and-rear direction the front portion 16A of the roof side rail portion 16, and the cutout 60 is positioned on the vehicle rear side of the front portion 16A of the roof side rail portion 16. Moreover, the cutout 60 is positioned on the vehicle rear side of the vehicle front-and-rear direction central portion inside the closed cross-section 98 as seen in a vehicle side view; more specifically, the cutout 60 is positioned in the rear portion inside the closed cross-section 98 in such a way as to be near the joint portion 90. In this way, in the vehicle body structure 10, the cutout 60 is set in a position away from the front pillar portion 14 and is also positioned inside the closed cross-section 98, which is a region whose rigidity is high.

As shown in FIG. 2, the windshield glass 20 is placed in such a way its vehicle width direction outer side vertical edge portion 20A is superposed on the vehicle front side of the outer side flange 38. Additionally, the vertical edge portion 20A of the windshield glass 20 is fixed by an adhesive material 100 to the outer side flange 38. Further, the lower side flange 34, the lower side flange 44, and the lower side flange 54 configure an attachment portion 102, and an opening weather strip 104 is attached to the attachment portion 102.

Further, an outer molding 106 is placed on the vehicle width direction outer side of the windshield glass 20. The outer molding 106 is attached to the frame member 22 via unillustrated brackets or the like. Further, an inner garnish 108 is disposed on the vehicle inner side of the front pillar portion 14. Moreover, a side glass 112 and a door frame 114 that supports the side glass 112 in such a way that the side glass 112 can be raised and lowered are disposed in a side door 110, and a door weather strip 116 is attached to the door frame 114.

Next, the action and effects of the embodiment of the present invention will be described.

As shown in FIG. 1, according to the vehicle body structure 10 pertaining to the embodiment of the present invention, the front side flange 5 8A formed on the section of the inner side wall portion 52 configuring the front pillar portion 14 and the front portion 16A of the roof side rail 16 extends outward in the vehicle width direction from the vehicle upper side end portion of the inner side wall portion 52. Consequently, protruding of the front pillar portion 14 inward in the vehicle width direction can be suppressed, so the front pillar portion 14 can be made narrower. Because of this, the field of vision from the driver seat can be enlarged.

Further, because the front side flange 5 8A is formed on the section of the inner side wall portion 52 configuring the front pillar portion 14 and the front portion 16A of the roof side rail portion 16 as described above, the cutout 60 formed in the inner side wall portion 52 between the front side flange 58A and the rear side flange 58B in the vehicle width direction is positioned on the vehicle rear side of the front pillar portion 14. Consequently, the cutout 60 is formed in a position away from the front pillar portion 14, so the rigidity and the strength of the front pillar portion 14 can be ensured.

Further, although the cutout 60 is formed in the roof side rail portion 16, the cutout 60 is positioned inside the closed cross-section 98 formed by the front portion 62A of the roof panel 62 and the header panel 64 as seen in a vehicle side view. Consequently, because the cutout 60 is positioned inside the closed cross-section 98, which is a region whose rigidity is high, a drop in the rigidity and the strength of the roof side rail portion 16 can also be suppressed while ensuring the rigidity and the strength of the front pillar portion 14.

Further, only the position of the cutout 60 is changed in order to ensure the rigidity and the strength of the front pillar portion 14, so it is not necessary to use a reinforcement member or the like. Because of this, additions of parts and additions to the production process can be suppressed, so an increase in costs can be suppressed.

Further, the frame member 22 configures the front pillar portion 14 and the roof side rail portion 16, and the vehicle width direction outer side end portion of the header panel 64 is joined to the inner side wall portion 52 of the inner panel 28 configuring the frame member 22. Consequently, another member is not used to join together the front pillar portion 14, the roof side rail portion 16, and the header panel 64, so because of this also, an increase in costs can be suppressed.

Further, the cutout 60 is positioned in the rear portion inside the closed cross-section 98 as seen in a vehicle side view. Here, the bending moment that acts in the direction causing the front pillar portion 14 and the roof side rail portion 16 to bend at the time of a frontal impact of the vehicle has the following characteristic.

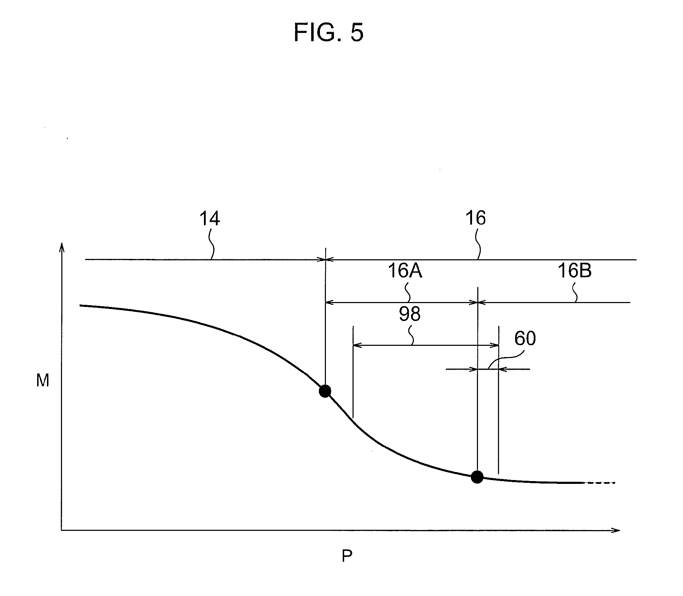

That is, in FIG. 5, there is shown the relationship between vehicle front-and-rear direction positions P in the frame member 22 shown in FIG. 4 and a bending moment M that acts in the direction causing the front pillar portion 14 and the roof side rail portion 16 to bend at the time of a frontal impact of the vehicle at those positions. As shown in this drawing, in the front pillar portion 14, the bending moment M gradually decreases as it approaches the roof side rail portion 16. In the front portion 16A of the roof side rail portion 16, the bending moment M gradually decreases as it heads toward the vehicle rear side, and in the rear side portion 16B of the roof side rail portion 16, the bending moment M is a value decreased over the case of the front pillar portion 14 and becomes substantially constant because the rear side portion 16B becomes substantially horizontal. Consequently, when the cutout 60 is positioned in the rear portion inside the closed cross-section 98 as seen in a vehicle side view as described above, the cutout 60 is positioned in a region where the bending moment is decreased, so the rigidity and the strength of the front pillar portion 14 can be ensured even more.

Further, as shown in FIG. 1 and FIG. 4, the cutout 60 is near the joint portion 90 at which the vehicle width direction outer side end portion 78A of the vehicle rear side flange 78 is joined to the rear portion 38B of the outer side flange 38 and the rear side flange 58B. Here, the joint portion 90 is a joint portion at which the frame member 22 and the header panel 64 are joined together and is a site whose rigidity is high. Consequently, when the cutout 60 is near a site whose rigidity is high in this way, a drop in rigidity resulting from the cutout 60 can be effectively compensated, so the rigidity and the strength of the front pillar portion 14 can be ensured even more.

The cutout 60 is positioned in the rear portion inside the closed cross-section 98 as seen in a vehicle side view; however, for example, in a case where the rigidity and the strength of the roof side rail portion 16 can be ensured, the cutout 60 may also be positioned in the vehicle front-and-rear direction central portion, or on the vehicle rear side of the vehicle front-and-rear direction central portion, inside the closed cross-section 98 as seen in a vehicle side view.

An embodiment of the present invention has been described above, but the present invention is not limited to the above description and can, in addition to the above description, be modified in various ways and implemented in a range not departing from the gist of the present invention.

## Claims

1. A vehicle body structure comprising:
a frame member that has
a side outer panel integrally having an outer side flange that extends inward in a vehicle width direction and an outer side wall portion that is formed on a vehicle width direction outer side of the outer side flange and
an inner panel integrally having an inner side flange that is joined to the outer side flange and an inner side wall portion that is disposed opposing the outer side wall portion on a vehicle width direction inner side of the outer side wall portion,
wherein the frame member extends in a vehicle front-and-rear direction and configures a front pillar portion and a roof side rail portion of a vehicle body; and
a header panel that extends in the vehicle width direction, has a vehicle width direction outer side end portion that is joined to the frame member, has a cross-sectional shape cut along the vehicle front-and-rear direction that is formed in a hat-like shape, is joined to a roof panel configuring a roof portion of the vehicle body, and configures a closed cross-section together with the roof panel,
wherein
the inner side flange has
a front side flange that is formed on a section of the inner side wall portion configuring the front pillar portion and a front portion of the roof side rail portion and extends outward in the vehicle width direction from a vehicle upper side end portion of the inner side wall portion and
a rear side flange that is formed on a section of the inner side wall portion configuring a vehicle rear side portion on a vehicle rear side of the front portion of the roof side rail portion and extends inward in the vehicle width direction from a vehicle upper side end portion of the inner side wall portion, and
a cutout formed so as to open to the vehicle upper side in the inner side wall portion between the front side flange and the rear side flange in the vehicle width direction is positioned inside the closed cross-section as seen in a vehicle side view.

2. The vehicle body structure according to claim 1, wherein the cutout is positioned in a vehicle front-and-rear direction central portion, or on the vehicle rear side of the vehicle front-and-rear direction central portion, inside the closed cross-section as seen in a vehicle side view.

3. The vehicle body structure according to claim 1 or claim 2, wherein
a vehicle width direction outer side end portion of a vehicle rear side flange, of a pair of flanges formed on both vehicle front-and-rear direction side end portions of the header panel, is joined to the outer side flange and the rear side flange, and
the cutout is near a joint portion at which the vehicle width direction outer side end portion of the vehicle rear side flange of the pair of flanges is joined to the outer side flange and the rear side flange.
